# FASCICULE DE BREVET EUROPEEN

(11) **EP 2 858 814 B1**
(45) Date de publication et mention de la délivrance du brevet: **24.08.2016**
(21) Numéro de dépôt: 13728461.8
(22) Date de dépôt: 23.05.2013
(51) Int. Cl.: B29D 30/00, B66C 1/54

(54) **DISPOSITIF DE SUPPORT D'UN BANDAGE DE GOMME CRUE POUR LA FABRICATION D'UN PNEUMATIQUE**
VORRICHTUNG ZUR UNTERSTÜTZUNG EINES ROHGUMMIREIFENS ZUR HERSTELLUNG EINES LUFTREIFENS
DEVICE FOR SUPPORTING A RAW RUBBER TYRE FOR THE MANUFACTURE OF A PNEUMATIC TYRE

(30) Priorité: 06.06.2012 FR 1255262
(43) Date de publication de la demande: 15.04.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: THALGOTT, Sébastien, 63040 Clermont Ferrand Cedex 9 (FR); MOYNET, Julien, 63040 Clermont Ferrand Cedex 9 (FR)
(74) Mandataire: Noel, Luminita
(86) Numéro de dépôt international: PCT/FR2013/051115
(87) Numéro de publication internationale: WO 2013/182772

(56) Documents cités:
- WO-A1-2011/128584
- JP-A- 57 148 638
- US-A- 2 927 343
- US-A- 3 337 173
- US-A- 3 845 979
- US-A- 4 600 370
- US-A- 4 608 219

## Description

L'invention concerne la fabrication des pneumatiques de véhicule et en particulier la manutention des bandages.

La fabrication d'un pneumatique requiert la réalisation d'un bandage comprenant de la gomme crue et des éléments de renfort. La gomme crue est souple et présente un comportement plastique si bien que le bandage tend à s'affaisser sous son propre poids. Pour son stockage et son transport entre les postes de fabrication, il est donc nécessaire qu'il soit supporté par un dispositif adapté. Pour cela, on peut utiliser celui parfois appelé « tulipe ». La tulipe comprend des bras qui permettent de supporter le bourrelet supérieur du bandage lorsque celui-ci a son axe principal vertical. On en préserve ainsi les caractéristiques dimensionnelles, notamment lors du transport du bandage depuis son poste de réalisation jusqu'à la presse de cuisson pour la vulcanisation de la gomme et l'obtention de l'enveloppe du pneumatique. Mais la séparation du bandage par rapport à la tulipe constitue une opération délicate car elle doit être effectuée sans heurter le bandage avec les bras, sachant que la gomme est encore particulièrement fragile à ce stade.

L'art antérieur divulgue des dispositifs de support d'un bandage de gomme crue pour la fabrication d'un pneumatique.

Le document US 4600370 A, par exemple, décrit un dispositif ayant des bras portant chacun une cale s'étendant en saillie du bras suivant une direction radiale à un axe principal du dispositif.

Un but de l'invention est de faciliter l'extraction du bandage hors du dispositif de support.

À cet effet, on prévoit selon l'invention un dispositif de support d'un bandage de gomme crue pour la fabrication d'un pneumatique, comme défini dans la revendication 1. Le dispositif comprend des bras portant chacun une cale articulée au bras et agencée pour s'étendre au-dessus de lui,
chaque cale présentant une face supérieure agencée pour supporter un bourrelet supérieur d'un bandage et une face inférieure agencée pour être actionnée par un bourrelet inférieur du bandage, chaque cale étant agencée de sorte que, la cale s'étendant en saillie du bras suivant une direction radiale à un axe principal du dispositif d'un côté du bras opposé à l'axe, une sollicitation vers le haut sur la face inférieure place la cale dans une position dans laquelle elle ne s'étend plus en saillie du bras suivant la direction radiale dudit côté du bras.

Ainsi, dans une première position, les cales du dispositif s'étendent en saillie radialement et supportent le bandage par son bourrelet supérieur et, dans la deuxième position, les cales sont actionnées vers le haut par le bourrelet inférieur du bandage et permettent le passage du bandage et son retrait hors du dispositif. On peut donc facilement extraire le bandage du dispositif sans risquer de l'abîmer.

Et on peut même accélérer cette étape pour gagner en productivité. De plus, l'extraction du bandage peut avoir lieu sans déplacer les bras. Cela signifie qu'il n'est pas nécessaire de rapprocher les bras les uns des autres pour extraire le bandage. Or cela constitue un avantage significatif lorsque le dispositif est monté sur un moyen de transport tel qu'un chariot dépourvu d'une alimentation en énergie. En effet, cela implique que le déchargement du bandage ne nécessite pas au préalable d'accoupler le dispositif à une source d'énergie après l'arrivée du chariot au lieu de déchargement. Il est donc possible de réduire le temps de cycle et de réaliser un gain de productivité. De plus, le recours à une source d'énergie n'étant pas nécessaire à ce stade, l'utilisation du dispositif est plus économique.

Avantageusement, la face supérieure est agencée pour supporter une partie inférieure du bourrelet supérieur et la face inférieure est agencée pour être actionnée par une partie supérieure du bourrelet inférieur.

De préférence, chaque cale est agencée de sorte que, dans la position dans laquelle elle ne s'étend plus en saillie, une face périphérique de la cale s'étend dans le prolongement d'une face périphérique du bras.

Ainsi, cette disposition des faces réduit encore le risque de heurter le bandage avec un élément saillant du dispositif et facilite son extraction.

Avantageusement, les bras présentent une face périphérique ayant une génératrice rectiligne verticale.

Cette forme des bras permet de prendre appui sur ceux-ci pour guider le bandage lors de son extraction.

Avantageusement, le dispositif comprend des moyens de rappel tendant à placer chaque cale en saillie du bras suivant la direction radiale à l'axe.

Ainsi, la cale reprend spontanément sa position en saillie du bras dès qu'elle n'est plus empêchée de le faire. Cela rend plus sûre la configuration dans laquelle le dispositif maintient un bandage.

Par exemple, chaque bras porte un organe de rappel articulé d'une part au bras et d'autre part à la cale.

Avantageusement, la face supérieure est de forme concave.

Cette forme de la cale offre un support stable pour le bourrelet supérieur du bandage.

De préférence, les bras sont montés mobiles par rapport à l'axe suivant une direction radiale à l'axe.

Par exemple, les bras sont montés coulissants par rapport à l'axe suivant une direction radiale à l'axe.

On peut ainsi placer les bras en position rétractée pour faciliter l'installation du bandage sur le dispositif.

On prévoit également selon l'invention un procédé de manutention d'un bandage de gomme crue pour la fabrication d'un pneumatique, comme défini dans la revendication 9, qui présente les étapes successives suivantes :
- des cales d'un dispositif portent un bourrelet supérieur du bandage de sorte qu'un axe principal du bandage est vertical ; et
- on fait coulisser le bandage par rapport au dispositif de sorte qu'un bourrelet inférieur du bandage déplace les cales pour les franchir.

Ainsi il n'est pas nécessaire de prévoir une opération particulière pour effectuer l'effacement des cales.

On peut prévoir que les cales portent une partie inférieure d'un bourrelet supérieur du bandage.

De préférence, des bras du dispositif sont en contact chacun simultanément avec les bourrelets supérieur et inférieur.

Un tel maintien permet de préserver les caractéristiques dimensionnelles du bandage durant son stockage et son transport.

Nous allons maintenant présenter un mode de réalisation de l'invention à titre d'exemple non limitatif et à l'appui des dessins sur lesquels :
- la figure 1 est une vue en coupe axiale d'un dispositif selon un mode de réalisation de l'invention ;
- la figure 2 est une vue en perspective du dispositif de la figure 1 ;
- les figures 3 et 4 sont des vues à plus grande échelle montrant l'une des cales du dispositif de la figure 2 ;
- les figures 5 à 7 montrent trois étapes de mise en oeuvre du procédé de l'invention au moyen du dispositif des figures précédentes ;
- la figure 8 est une vue simplifiée en élévation montrant la cinétique de l'une des cales du dispositif de la figure 1 ; et
- la figure 9 est une vue en perspective d'une installation de cuisson de bandages comprenant le dispositif de la figure 1.

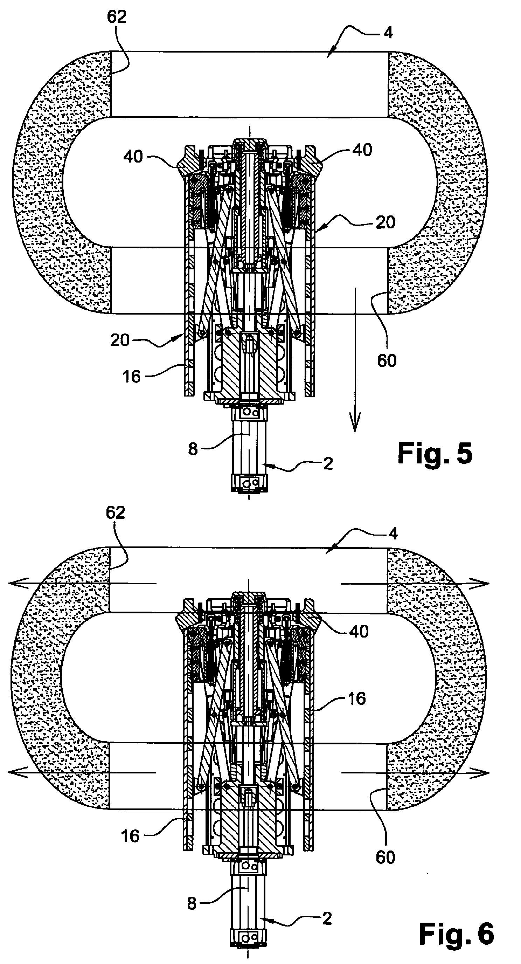

On a représenté sur les figures un dispositif 2 servant au support d'un bandage 4 de pneumatique. Ce bandage comprend de la gomme crue et des éléments de renfort et a été illustré schématiquement aux figures 5 à 7.

Le dispositif 2 comprend un mât central 6 présentant un axe principal vertical 8. Il comprend également un bâti inférieur 10 auquel la base du mât est fixée rigidement et qui se trouve lui-même par exemple monté sur un chariot de transport du bandage, comme on le verra plus loin.

Le dispositif 2 comprend un socle 12 présentant une forme générale à symétrie de révolution d'axe 8 et coaxial au mât auquel il est rigidement fixé. Il comprend également une bague supérieure 14 présentant elle aussi une forme générale à symétrie de révolution d'axe 8 et montée mobile à coulissement suivant cet axe par rapport au socle.

Le dispositif 2 comprend des bras 16, ici au nombre de six, ce nombre n'étant pas limitatif et pouvant être inférieur ou supérieur à cette valeur. Les bras sont identiques entre eux. Chaque bras 16 comporte un corps rigide 18 présentant une face externe périphérique 20 de forme cylindrique telle que le cylindre a pour axe l'axe 8 et présente une section horizontale circulaire. Les faces 20 présentent donc des génératrices rectilignes verticales et forment des portions discontinues de ce même cylindre.

Pour chaque bras 16, le dispositif comprend deux bielles rectilignes 22 et 24 articulées directement l'une à l'autre en leur milieu autour d'un axe horizontal et perpendiculaire à la direction radiale à l'axe 8. La bielle 22 présente une extrémité inférieure périphérique articulée directement au bras 16 et une extrémité supérieure interne articulée à la bague 14. La bielle 24 présente une extrémité inférieure interne articulée directement au socle 12 et une extrémité supérieure périphérique reliée au bras à un point s'étendant plus haut que l'articulation au bras de la bielle 22. Ces articulations des bielles ont des axes parallèles à l'axe 26. L'extrémité supérieure de la bielle 24 porte un doigt 30 monté coulissant suivant la direction verticale dans une gorge 32 du bras.

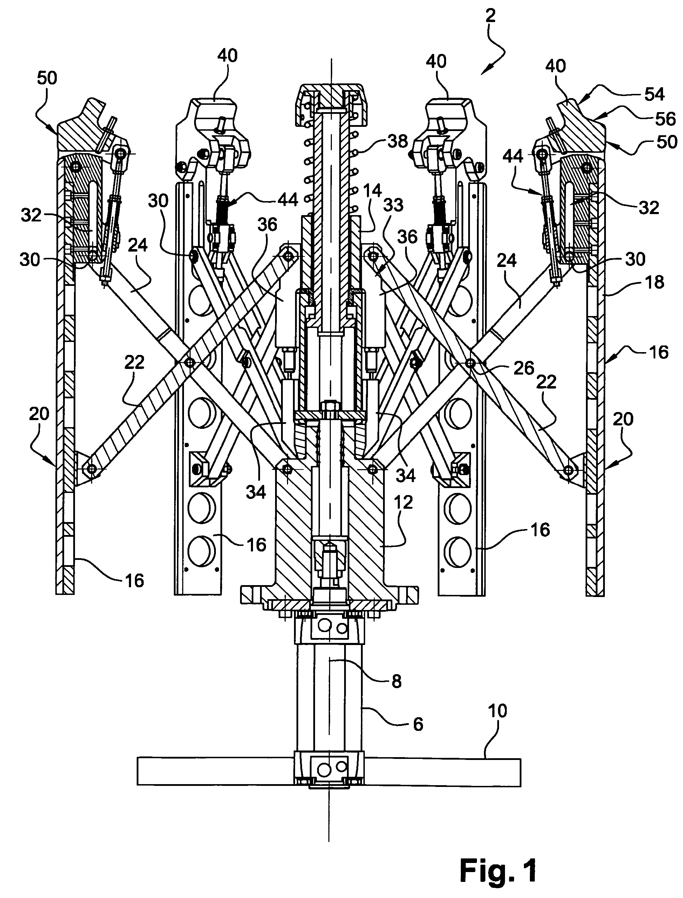

Pour chaque bras, le dispositif comprend un actionneur 33 sous la forme d'un vérin comprenant un piston 34 rigidement fixé au socle 12 et un corps 36 rigidement fixé à la bague 14 et par rapport auquel le piston est monté coulissant suivant une direction parallèle à l'axe 8. C'est au corps 36 que l'extrémité supérieure de la bielle 22 est directement articulée. Grâce à cet agencement, la commande des vérins 33 permet de faire coulisser vers le haut la bague 14 et entraîne le coulissement de chacun des bras 16 en direction de l'axe 8 suivant la direction radiale. C'est ainsi qu'on réalise la rétraction des bras. Cette configuration rétractée du dispositif est illustrée aux figures 5 et 6. Le mouvement inverse de ces éléments provoque l'extension des bras pour obtenir la configuration étendue du dispositif illustrée aux figures 1, 2 et 7. On dit que la tulipe est respectivement fermée et ouverte. Au cours de ces mouvements, les bras, en particulier leur face externe 20, restent verticaux.

Le mât 6 porte un ressort de rappel 38 relié par son extrémité supérieure à l'extrémité supérieure du mât et par son extrémité inférieure à la bague 14. Il sollicite la bague 14 vers le bas pour tendre par défaut à placer la tulipe en configuration ouverte.

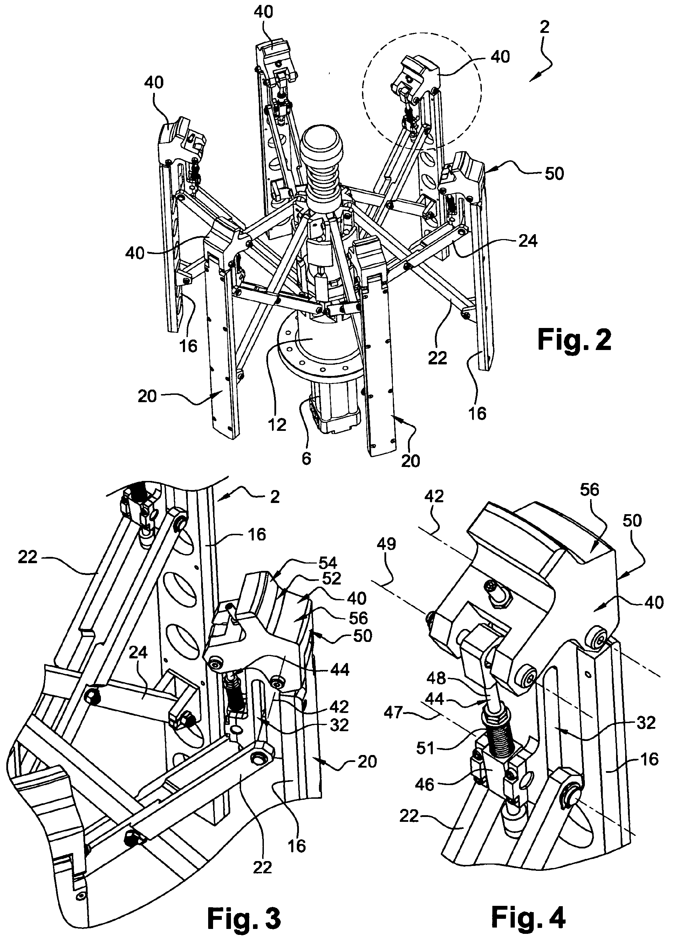

Nous allons maintenant décrire la partie supérieure des bras en référence notamment aux figures 3 et 4. Le dispositif comprend des cales ou becs 40 situés aux extrémités supérieures respectives des bras pour s'étendre au-dessus d'eux. La cale 40 de chaque bras est articulée à l'extrémité supérieure de ce dernier directement autour d'un axe horizontal 42 parallèle à l'axe 26. Pour chaque bras, le dispositif comporte en outre un vérin à ressort 44 comprenant un corps 46 et une tige 48 montée coulissante dans le corps 46 suivant une direction longitudinale de la tige et sollicitée pour tendre à s'éloigner du corps par un ressort 51. Le corps 46 est directement articulé au bras 16 autour d'un axe 47 tandis que la tige 48 est directement articulée à la cale 40 autour d'un axe 49, ces deux axes étant parallèles à l'axe 26.

La cale 40 présente une face externe périphérique ou face inférieure 50 ayant la même forme cylindrique que la face 20 du bras. La cale est apte à prendre une position autour de l'axe 42, illustrée à la figure 3, telle que les faces 20 et 50 s'étendent dans le prolongement l'une de l'autre, la face 50 de la cale ayant pour axe l'axe 8. Il s'agit de la position en retrait ou position effacée de la cale. Les faces 20 et 50 sont alors orientées en direction opposée à l'axe 8. Dans cette position, la face 50 constitue la partie de la cale la plus éloignée de l'axe 8. De plus, la cale ne s'étend pas en saillie de la face 20 du bras suivant la direction radiale et en direction opposée à l'axe. Cette position de la cale est prise à l'encontre de la force de rappel du vérin 44 qui tend à la lui faire quitter.

Comme illustré aux figures 5 et 6, la cale est également apte à prendre une position autour de l'axe 42 telle que la cale, notamment sa face 50, s'étend en saillie de la face 20 du bras suivant la direction radiale et en direction opposée à l'axe.

La cale 40 présente en outre une face d'appui supérieure 52 de forme concave. Cette face présente en l'espèce deux facettes 54 et 56 à symétrie de révolution d'axe 8 et donnant à cette face un profil en angle obtus dans un plan radial à l'axe 8.

Dans les deux positions de la cale, la facette inférieure 56 est orientée vers le haut et en direction opposée à l'axe 8. Dans la position en saillie illustrée à la figure 5, la facette supérieure 54 est orientée en direction radiale et en direction opposée à l'axe 8. Dans la position en retrait illustré aux figures 3 et 4, la facette supérieure 54 est orientée vers le haut.

Nous allons maintenant présenter un mode de mise en oeuvre du procédé selon l'invention au moyen de ce dispositif. On suppose qu'on a réalisé un bandage 4 de pneumatique en assemblant des éléments de gomme crue ainsi que des organes de renfort.

En référence à la figure 5, il s'agit dans une première étape de disposer le bandage 4 sur le dispositif 2. Le bandage est initialement supporté par des moyens adaptés non illustrés. Le dispositif 2 est initialement en configuration rétractée, les cales occupant leur position en saillie. L'axe 8 est vertical. On présente le bandage de sorte que son axe principal soit confondu avec l'axe du dispositif. Le bandage s'étend au-dessus du dispositif. On le fait coulisser vers le bas pour qu'il entoure le dispositif jusqu'à placer un bourrelet inférieur 60 du bandage en regard de la face 20 des bras suivant la direction radiale et un bourrelet supérieur 62 du bandage en regard de la face 52 des cales suivant la direction radiale.

C'est la position qui est atteinte à la figure 6. On commande ensuite le passage du dispositif de la configuration rétractée à la configuration étendue en actionnant les vérins 33. Par conséquent, les bras 16 coulissent jusqu'à venir en partie inférieure en appui radial contre le bourrelet inférieur 60 et que les cales 40 viennent en appui contre le bourrelet supérieur 62. Plus précisément, la partie inférieure (ou axialement inférieure par référence à l'axe 8) du bourrelet supérieur vient se loger dans le creux de la face 52. Il est supporté à l'encontre de sa descente par la facette 56 et à l'encontre de son mouvement vers l'axe 8 par la facette 54. Le bourrelet supérieur 62 est donc porté par les cales 40. Le bandage se trouve alors supporté par le dispositif et on peut cesser de le supporter par les autres moyens.

L'ensemble formé par le dispositif et le bandage peut être stocké et déplacé dans cette configuration, par exemple pour emmener le bandage sur un chariot jusqu'à une presse de cuisson.

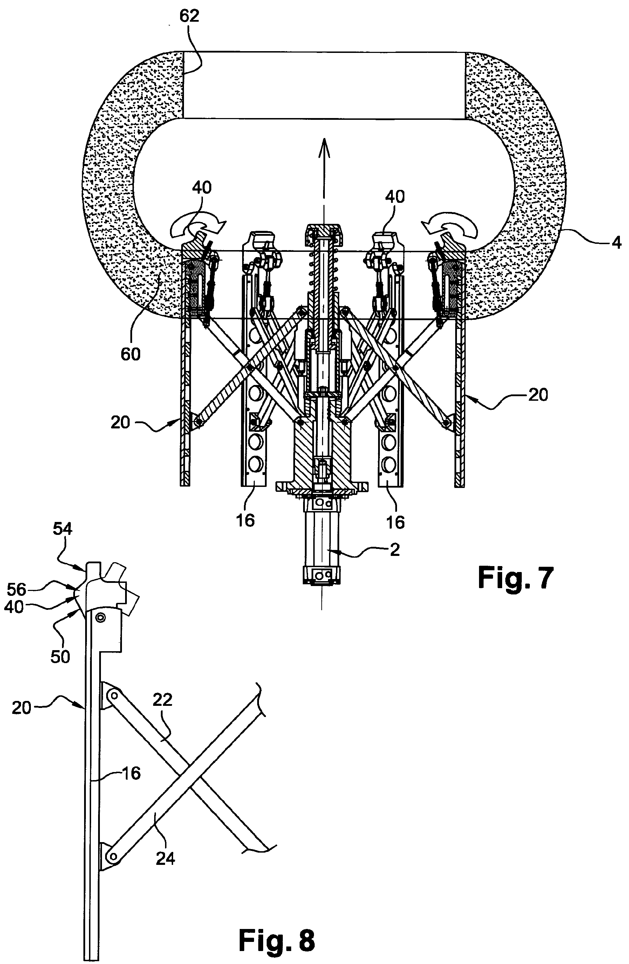

En référence à la figure 7, pour extraire le bandage du dispositif, on fait coulisser le bandage vers le haut suivant la direction de l'axe 8 par rapport au dispositif. Au cours de ce mouvement, le bourrelet supérieur 62 quitte les cales. De plus, le bourrelet inférieur 60 longe la face 20 des bras jusqu'à venir en contact par sa partie supérieure (ou axialement supérieure) avec la face 50 des cales alors orientée vers le bas. La raideur du ressort 51 est suffisamment faible pour que la sollicitation exercée par le bourrelet inférieur 60 vers le haut sur la face 50 provoque le basculement des cales en direction de l'axe principal 8 autour de l'axe 42 jusqu'à mettre les cales en position effacée. Le mouvement vers le haut du bourrelet inférieur 60 peut donc se poursuivre en appui contre la face 50 des cales maintenant située dans le prolongement de la face 20 des bras, comme illustré à la figure 7. Le bandage peut finalement être complètement extrait du dispositif. La rotation de la cale de l'une à l'autre de ces deux positions a notamment été illustrée à la figure 8.

Comme on le voit, il n'est pas nécessaire de replacer le dispositif en configuration rétractée pour extraire le bandage du dispositif. Cela permet d'augmenter la productivité en raccourcissant les temps de cycle.

Le dispositif de l'invention permet de stocker le bandage et de le transporter en en préservant les caractéristiques dimensionnelles. Il permet d'extraire rapidement le bandage du dispositif sans l'abîmer.

Le dispositif fait partie d'une installation pour la fabrication d'enveloppes de pneumatique de roue de véhicules. Il pourra s'agir de véhicules de type léger, de véhicules de tourisme, de véhicules utilitaires, de véhicule de type poids-lourd ou encore d'engins de génie civil.

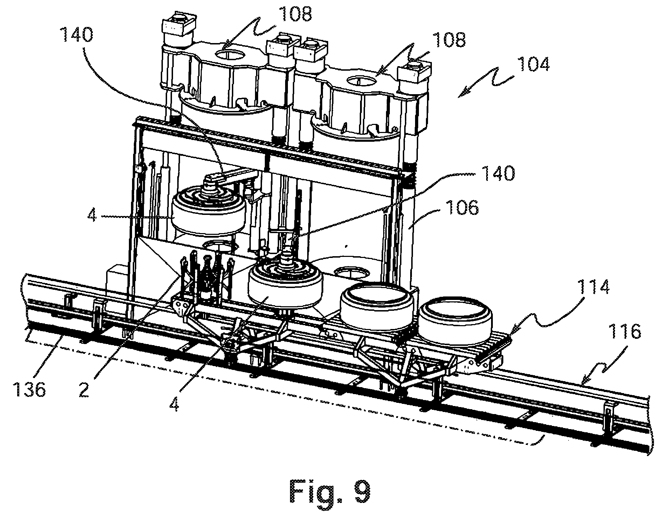

En référence à la figure 9, l'installation 104 comprend par exemple un poste de cuisson 106 comprenant une ou plusieurs presses de cuisson 108, ici au nombre de deux, qui permettent de réaliser la vulcanisation de la gomme et d'obtenir une enveloppe.

L'installation comprend un organe de transport 114 monté mobile par rapport au poste 106 sur une voie de guidage 116. L'organe 114 est ici formé par un chariot qui comporte un bâti portant des dispositifs 2 qui sont en espèces au nombre de deux. Il s'agit de deux supports identiques aptes à supporter chacun un bandage cru. Le chariot comprend aussi des supports d'enveloppe formés en l'espèce par une table à rouleaux.

La voie de guidage 116 s'étend en l'espèce au sol et y est rigidement fixée. Elle forme ici une voie ferrée. Elle s'étend suivant une direction horizontale rectiligne. Elle comprend deux rails latéraux 136. Le chariot 114 comprend quatre jambages portant chacun une roue apte à venir en appui sur l'un des deux rails. Le chariot est ainsi monté pour rouler sur la voie.

La voie s'étend depuis un poste de chargement de bandages crus destinés à être cuits. Elle s'étend aussi jusqu'à un poste de refroidissement des enveloppes cuites. Elle passe par ailleurs à proximité du poste 106. Plus précisément, la voie 16 intercepte une zone de chargement et de déchargement du poste 106. Ce chargement et ce déchargement est assuré par au moins un organe tel qu'une potence 140. Dans cette zone, les bandages crus situés sur le chariot peuvent donc être transportés par l'une des potences depuis le chariot jusqu'à la presse correspondante et les enveloppes cuites peuvent être transportées des presses jusqu'au chariot.

Bien entendu, on pourra apporter à l'invention de nombreuses modifications sans sortir du cadre de celle-ci.

## Revendications

1. Dispositif (2) de support d'un bandage (4) de gomme crue pour la fabrication d'un pneumatique, qui comprend des bras (16) portant chacun une cale (40) articulée au bras et agencée pour s'étendre au-dessus de lui,
chaque cale présentant une face supérieure (52) agencée pour supporter un bourrelet supérieur (62) d'un bandage et une face inférieure (50) agencée pour être actionnée par un bourrelet inférieur (60) du bandage,
chaque cale étant agencée de sorte que, la cale s'étendant en saillie du bras suivant une direction radiale à un axe principal (8) du dispositif d'un côté du bras opposé à l'axe, une sollicitation vers le haut sur la face inférieure (50) place la cale dans une position dans laquelle elle ne s'étend plus en saillie du bras suivant la direction radiale dudit côté du bras.

2. Dispositif selon la revendication précédente dans lequel chaque cale est agencée de sorte que, dans la position dans laquelle elle ne s'étend plus en saillie, une face périphérique (50) de la cale s'étend dans le prolongement d'une face périphérique (20) du bras.

3. Dispositif selon au moins l'une quelconque des revendications précédentes dans lequel les bras présentent une face périphérique (20) ayant une génératrice rectiligne verticale.

4. Dispositif selon au moins l'une quelconque des revendications précédentes qui comprend des moyens de rappel (44) tendant à placer chaque cale en saillie du bras suivant la direction radiale à l'axe.

5. Dispositif selon au moins l'une quelconque des revendications précédentes dans lequel chaque bras porte un organe de rappel (44) articulé d'une part au bras et d'autre part à la cale.

6. Dispositif selon au moins l'une quelconque des revendications précédentes dans lequel la face supérieure (52) est de forme concave.

7. Dispositif selon au moins l'une quelconque des revendications précédentes dans lequel les bras (16) sont montés mobiles par rapport à l'axe suivant une direction radiale à l'axe.

8. Dispositif selon au moins l'une quelconque des revendications précédentes dans lequel les bras (16) sont montés coulissants par rapport à l'axe suivant une direction radiale à l'axe.

9. Procédé de manutention d'un bandage (4) de gomme crue pour la fabrication d'un pneumatique, **caractérisé en ce qu'**il présente les étapes successives suivantes :
- des cales (40) d'un dispositif (2) portent un bourrelet supérieur (62) du bandage de sorte qu'un axe principal du bandage est vertical ; et
- on fait coulisser le bandage par rapport au dispositif de sorte qu'un bourrelet inférieur (60) du bandage déplace les cales pour les franchir.

10. Procédé selon la revendication précédente dans lequel les cales portent une partie inférieure d'un bourrelet supérieur (62) du bandage.

11. Procédé selon au moins l'une quelconque des revendications 9 à 10 dans lequel des bras (16) du dispositif sont en contact chacun simultanément avec les bourrelets supérieur et inférieur.

## Patentansprüche

1. Vorrichtung (2) zur Unterstützung eines Rohgummireifens (4) zur Herstellung eines Luftreifens, der Arme (16) umfasst, die jeweils einen Keil (40) tragen, der an dem Arm angelenkt ist und so angeordnet ist, dass er sich über ihm erstreckt, wobei jeder Keil eine obere Fläche (52), die so angeordnet ist, dass sie eine obere Wulst (62) eines Reifens unterstützt, und eine Innenfläche (50), die so angeordnet ist, dass sie von einer unteren Wulst (60) des Reifens betätigt wird, aufweist, wobei jeder Keil so angeordnet ist, dass bei einem Keil, der sich über den Arm hervorstehend in eine zu einer Hauptachse (8) der Vorrichtung radiale Richtung auf einer der Achse gegenüberliegenden Seite des Arms erstreckt, eine nach oben gerichtete Belastung der Innenfläche (50) den Keil in eine Position bringt, in der er sich nicht mehr über den Arm hervorstehend in radiale Richtung auf der Seite des Arms erstreckt.

2. Vorrichtung nach dem vorhergehenden Anspruch, wobei jeder Keil so angeordnet ist, dass sich in der Position, in der er sich nicht mehr hervorstehend erstreckt, eine Umfangsfläche (50) des Keils in Verlängerung einer Umfangsfläche (20) des Arms erstreckt.

3. Vorrichtung nach mindestens einem der vorhergehenden Ansprüche, wobei die Arme eine Umfangsfläche (20) mit einer vertikalen geradlinigen Erzeugenden aufweisen.

4. Vorrichtung nach mindestens einem der vorhergehenden Ansprüche, die Rückstellvorrichtungen (44) umfasst, die darauf ausgerichtet sind, jeden Keil über den Arm hervorstehend in die zu der Achse radiale Richtung zu platzieren.

5. Vorrichtung nach mindestens einem der vorhergehenden Ansprüche, wobei jeder Arm eine Rückstellvorrichtung (44) trägt, die einerseits an dem Arm und andererseits an dem Keil angelenkt ist.

6. Vorrichtung nach mindestens einem der vorhergehenden Ansprüche, wobei die obere Fläche (52) eine konkave Form hat.

7. Vorrichtung nach mindestens einem der vorhergehenden Ansprüche, wobei die Arme (16) relativ zu der Achse beweglich in eine zu der Achse radiale Richtung montiert sind.

8. Vorrichtung nach mindestens einem der vorhergehenden Ansprüche, wobei die Arme (16) relativ zu der Achse gleitend in eine zu der Achse radiale Richtung montiert sind.

9. Verfahren zur Handhabung eines Rohgummireifens (4) zur Herstellung eines Luftreifens, **dadurch gekennzeichnet, dass** es die folgenden aufeinanderfolgenden Schritte aufweist:
- Keile (40) einer Vorrichtung (2) tragen eine obere Wulst (62) des Reifens, sodass eine Hauptachse des Reifens vertikal ist; und
- man lässt den Reifen relativ zu der Vorrichtung gleiten, sodass eine untere Wulst (60) des Reifens die Keile verschiebt, um sie zu überwinden.

10. Verfahren nach dem vorhergehenden Anspruch, wobei die Keile einen unteren Abschnitt einer oberen Wulst (62) des Reifens tragen.

11. Verfahren nach mindestens einem der Ansprüche 9 bis 10, wobei die Arme (16) der Vorrichtung jeweils gleichzeitig mit der oberen und der unteren Wulst in Kontakt sind.

## Claims

1. Device (2) for supporting a raw rubber tyre (4) for the manufacture of a pneumatic tyre, which comprises arms (16) each bearing a block (40) articulated to the arm and arranged to extend above it,
each block having an upper face (52) arranged to support an upper bead (62) of a tyre and a lower face (50) arranged to be actuated by a lower bead (60) of the tyre,
each block being arranged in such a way that, with the block extending as a projection from the arm in a direction radial to a main axis (8) of the device on an opposite side of the arm to the axis, an upward force on the lower face (50) places the block in a position in which it no longer extends as a projection from the arm in the radial direction on that said side of the arm.

2. Device according to the preceding claim, in which each block is arranged in such a way that, in the position in which it no longer extends as a projection, a peripheral face (50) of the block extends in the continuation of a peripheral face (20) of the arm.

3. Device according to at least either one of the preceding claims, in which the arms have a peripheral face (20) having a vertical rectilinear generatrix.

4. Device according to at least any one of the preceding claims, which comprises return means (44) tending to place each block in projection from the arm in the direction radial to the axis.

5. Device according to at least any one of the preceding claims, in which each arm bears a return member (44) articulated, on the one hand, to the arm and, on the other hand, to the block.

6. Device according to at least any one of the preceding claims, in which the upper face (52) is of concave shape.

7. Device according to at least any one of the preceding claims, in which the arms (16) are mounted with the ability to move with respect to the axis in a direction radial to the axis.

8. Device according to at least any one of the preceding claims, in which the arms (16) are mounted with the ability to slide with respect to the axis in a direction radial to the axis.

9. Method for handling a raw rubber tyre (4) for the manufacture of a pneumatic tyre, **characterized in that** it has the following successive steps :
- blocks (40) of a device (2) support an upper bead (62) of the tyre so that a main axis of the tyre is vertical; and
- the tyre is slid with respect to the device in such a way that a lower bead (60) of the tyre moves the blocks in order to overcome them.

10. Method according to the preceding claim, in which the blocks support a lower part of an upper bead (62) of the tyre.

11. Method according to at least one of Claims 9 and 10, in which arms (16) of the device are each simultaneously in contact with the upper and lower beads.
